# EUROPÄISCHE PATENTANMELDUNG

(11) **EP 4 151 507 A1**
(43) Veröffentlichungstag der Anmeldung: **22.03.2023**
(21) Anmeldenummer: 22184011.9
(22) Anmeldetag: 11.07.2022
(51) Int. Cl.: B62D 55/088

(54) **RAUPENLAUFWERK**

(30) Priorität: 20.09.2021 DE 102021124221
(71) Anmelder: CLAAS Selbstfahrende Erntemaschinen GmbH, 33428 Harsewinkel (DE)
(72) Erfinder: Silies, Andreas, 48488 Emsbüren (DE); Rackow, Sascha, 33098 Paderborn (DE); Weingärtner, Felix, 32052 Herford (DE); Killian, Andreas, 33102 Paderborn (DE); Meier, Timon, 49124 Georgsmarienhütte (DE)
(74) Vertreter: CLAAS Gruppe

(57) **Zusammenfassung**

Die Erfindung betrifft eine landwirtschaftliche Arbeitsmaschine (1) mit einem Raupenlaufwerk (2), wobei das Raupenlaufwerk (2) ein rechtes und ein linkes Antriebsrad (8, 10) zum Antreiben eines elastischen Raupenbandes (6) des Raupenlaufwerks (2) umfasst, wobei die Antriebsräder (8, 10) drehbeweglich um eine gemeinsame Rotationsachse (11) und beabstandet zueinander angeordnet sind, wobei die Antriebsräder (8, 10) zwischeneinander eine Führungsnut (13) ausbilden, wobei den Antriebsrädern (8, 10) ein Abstreifelement (9) zugeordnet ist, wobei das Abstreifelement (9) eine erste und eine zweite Abstreiffläche (17, 18) umfasst, wobei die erste und zweite Abstreifflächen (17, 18) jeweils einem der Antriebsräder (8, 10) zugeordnet und zur Umfangsrichtung (20) der Antriebsräder (8, 10) schräg angeordnet sind.

## Beschreibung

Die Erfindung betrifft eine landwirtschaftliche Arbeitsmaschine mit einem Raupenlaufwerk, wobei das Raupenlaufwerk ein rechtes und ein linkes Antriebsrad zum Antreiben eines elastischen Raupenbandes des Raupenlaufwerks umfasst, wobei die Antriebsräder drehbeweglich um eine gemeinsame Rotationsachse und beabstandet zueinander angeordnet sind, wobei die Antriebsräder zwischeneinander eine Führungsnut ausbilden.

Landwirtschaftliche Arbeitsmaschinen umfassen Mähdrescher, Feldhäcksler oder Traktoren. Derartige werden zunehmend mit Raupenlaufwerken ausgestattet, welche eine verbesserte Übertragung von Zugkräften auf den Untergrund ermöglichen, sodass die Fahrzeuge leichter durch raue oder schlammige Felder bewegt werden können. Die Aufstandsfläche von Raupenlauwerken ist gegenüber einer herkömmlichen Bereifung deutlich erhöht und erlaubt eine bodenschonende Bearbeitung der Flächen. Das Raupenlaufwerk umfasst dabei üblicherweise zwei in Längsrichtung des Raupenlaufwerks hintereinander sowie einander gegenüberliegend angeordnete Umlenkräder und mindestens ein die Umlenkräder umspannendes elastisches Raupenband. Zwischen den Umlenkrädern befinden sich Stützräder. Das hintere Umlenkrad überträgt üblicherweise ein Antriebsmoment auf das Raupenband. Hierfür kann das hintere Umlenkrad ein rechtes und ein linkes Antriebsrad umfassen.

Ein solches Umlenkrad mit einem rechten und linken Antriebsrad ist aus der EP 3 415 407 A1 bekannt. Im Betriebszustand hat sich gezeigt, dass, insbesondere beim Durchfahren besonders schlammiger Felder, Verschmutzungen die Traktion zwischen dem Raupenband und den Antriebsrädern mindern. Besonders kritisch sind kleinere Steine, die sich in der Profilierung der Antriebsräder festsetzen und zu verstärkten Verschleißerscheinungen an der Innenseite des Raupenbands und auch an den Antriebsrädern führen.

Es ist deshalb Aufgabe der Erfindung, die beschriebenen Nachteile des Standes der Technik zu vermeiden und insbesondere ein Abstreifelement für die Antriebsräder eines Raupenlaufwerks zu schaffen, welches Verschmutzungen, insbesondere Steine, von den Antriebsrädern abstreift.

Diese Aufgabe wird erfindungsgemäß durch die kennzeichnenden Merkmale des Anspruchs 1 gelöst.

Gemäß dem Anspruch 1 wird eine landwirtschaftliche Arbeitsmaschine mit einem Raupenlaufwerk vorgeschlagen, wobei das Raupenlaufwerk ein rechtes und ein linkes Antriebsrad zum Antreiben eines elastischen Raupenbandes des Raupenlaufwerks umfasst, wobei die Antriebsräder drehbeweglich um eine gemeinsame Rotationsachse und beabstandet zueinander angeordnet sind, wobei die Antriebsräder zwischeneinander eine Führungsnut ausbilden, wobei den Antriebsrädern ein Abstreifelement zugeordnet ist, wobei das Abstreifelement eine erste und eine zweite Abstreiffläche umfasst, wobei die erste und zweite Abstreifflächen jeweils einem der Antriebsräder zugeordnet und zur Umfangsrichtung der Antriebsräder schräg angeordnet sind.

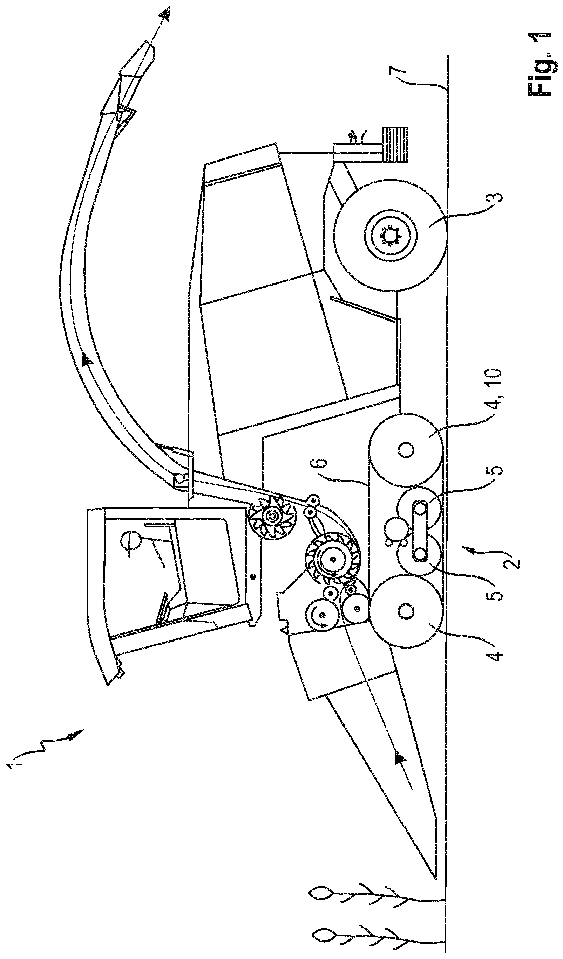

Die erfindungsgemäße landwirtschaftliche Arbeitsmaschine hat viele Vorteile. Die Abstreifelemente sind dazu eingerichtet, von den beiden Antriebsrädern radial außenseitig Verschmutzungen, insbesondere Steine und Dreck, abzustreifen. Hierdurch wird eine Abnahme der Traktion zwischen der Innenseite des Raupenbandes und den Antriebsrädern vermieden. Besonders vorteilhaft ist auch, dass die Abstreifelemente etwaige Steine von den Antriebsrädern abstreifen. Solche Steine können im Betriebszustand des Raupenlaufwerks zu Beschädigungen an der Innenseite des Raupenbandes führen und die Lebensdauer des Raupenbandes und auch die Lebensdauer der Antriebsräder reduzieren. Die schräge Anordnung der jeweiligen Abstreifflächen führt nun dazu, dass die Verunreinigungen in Richtung der Stirnseiten des jeweiligen Antriebsrades abgeleitet werden. Dadurch, dass das Abstreifelement zwei schräg in Umfangsrichtung angeordnete Abstreifflächen aufweist, können die Abstreifflächen derart schräg angeordnet sein, sodass diese Verunreinigungen hin zu den der der Führungsnut abgewandten Stirnseite des jeweiligen Antriebsrads fördern. Mithin wird auch ein Ansammeln von Verunreinigungen in der Führungsnut vermieden. Als Umfangsrichtung ist hier die Richtung zu verstehen, die einer Rotationsrichtung der Führungsfläche der Antriebsräder bei einer Vorwärtsfahrt entspricht und in Fig. 1 durch einen Pfeil gekennzeichnet ist.

Eine vorteilhafte Weiterbildung sieht vor, dass die Antriebsräder radial außenseitig jeweils eine Profilierung aufweisen, wobei sich die Vertiefungen der jeweiligen Profilierung im Wesentlichen geradlinig erstrecken und die Vertiefungen im Wesentlichen orthogonal zu der dem jeweiligen Antriebsrad zugeordneten Abstreiffläche ausgerichtet sind. Hierdurch ergibt sich ein positiver Verbundeffekt der Abstreiffläche mit den Vertiefungen. Die orthogonale Ausrichtung der Abstreiffläche zu den geradlinigen Vertiefungen bewirkt, dass die Verunreinigungen und insbesondere kleinere Steine entlang der Vertiefungen nach außen geschoben werden. Auch ein Verkeilen von Steinen zwischen den Vertiefungen und den Abstreifflächen wird vermieden.

Eine weitere vorteilhafte Weiterbildung sieht vor, dass die erste und zweite Abstreifflächen einander abgewandt ausgerichtet sind. Mit anderen Worten sind die Abstreifflächen zu den äußeren Stirnseiten der Antriebsräder ausgerichtet, um die Verunreinigungen aus dem Raupenlaufwerk hinaus zu befördern.

In einer vorteilhaften Ausgestaltung kann das Abstreifelement eine Lippe aufweisen, wobei die Lippe in die Führungsnut hineinragt, wobei vorzugsweise die Lippe auf einer Bodenfläche der Führungsnut zumindest abschnittsweise anliegt. Das Auffliegen der Lippe an der Bodenfläche stabilisiert die Anordnung des Abstreifelements, sodass das Abstreifelement auch bei etwaigen auf diesen wirkenden Stößen in seiner Position verbleibt. Ein weiterer Vorteil der in die Führungsnut hineinreichenden Lippe ergibt sich dadurch, dass über die Lippe in der Führungsnut befindliche Verunreinigungen herausgeleitet werden.

In einer weiteren vorteilhaften Ausgestaltung können die erste und zweite Abstreiffläche an einem Trägerelement des Abstreifelements angeordnet sein, wobei vorzugsweise die erste und zweite Abstreiffläche und das Trägerelement als separate Bauteile ausgebildet sind. Hierbei können die Abstreifflächen von separat an dem Abstreifelement angeordneten Abstreifern gebildet sein. Diese Ausgestaltung ermöglicht ein kostengünstiges Austauschen der einzelnen Abstreifflächen.

Besonders bevorzugt ist es, wenn die erste und zweite Abstreiffläche verstellbeweglich an dem Trägerelement angeordnet sind, sodass ein Abstand der ersten und zweiten Abstreiffläche zu dem jeweiligen Antriebsrad einstellbar ist. Die verstellbewegliche Anordnung ermöglicht ein derartiges Verschieben des Abstreifelements, sodass der Abstand respektive das Spaltmaß zwischen den Antriebsrädern und den Abstreifflächen einstellbar ist. Ein Abstand bzw. ein Spaltmaß von 2,5 mm hat sich in diversen Versuchen als besonders vorteilhaft erwiesen. Dieses Spaltmaß ermöglicht ein zuverlässiges Abstreifen der Verunreinigungen von der Oberfläche der Antriebsräder und erlaubt es Fertigungstoleranzen der Antriebsräder und auch Fertigungstoleranzen des Abstreifelements auszugleichen. Auch bei Verschleißerscheinungen kann das Spaltmaß aufgrund der verstellbeweglichen Anordnung nachjustiert werden.

Vorzugsweise kann das Trägerelement und/oder die erste Abstreiffläche und/oder die zweite Abstreiffläche Langlöcher zur Einstellung des Abstands der ersten und zweiten Abstreifflächen zu dem jeweiligen Antriebsrad aufweisen. Hierdurch wird eine verstellbewegliche Anordnung der Abstreifflächen auf einfache Art und Weise erreicht. Die Position der Abstreifflächen ist mittels einer Verschiebung der Abstreifflächen entlang der Langlöcher einstellbar.

Besonders vorteilhaft ist es, wenn das Raupenlaufwerk einen Schwenkarm umfasst, wobei die Antriebsräder und das Abstreifelement an dem Schwenkarm angeordnet sind, sodass auch bei einer Schwenkbewegung der Antriebsräder das Abstreifelement in seiner Position relativ zu den Antriebsrädern verbleibt.

Insbesondere kann das Abstreifelement flächig auf dem Schwenkarm anliegen und vorzugsweise mittels zumindest einer Schraubverbindung ortsfest an dem Schwenkarm angeordnet sein. Das flächige Anliegen bewirkt eine stabile und stoßfeste Anordnung des Abstreifelements an dem Schwenkarm. Hinsichtlich der Nachrüstbarkeit hat sich eine Schraubverbindung als besonders vorteilhaft erwiesen.

Weitere vorteilhafte Ausgestaltungen sind Gegenstand weiterer Unteransprüche und werden nachfolgend an Hand eines in mehreren Figuren dargestellten Ausführungsbeispiels beschrieben. Es zeigen:
- Figur 1: eine schematische Seitenansicht einer landwirtschaftlichen Arbeitsmaschine mit einem Raupenlaufwerk;
- Figur 2: eine schematische Ansicht der Antriebsräder eines Raupenlaufwerks mit einem Abstreifelement;
- Figur 3: eine schematische Ansicht des Abstreifelements gemäß Figur 2 mit einem Schwenkarm zur Anbindung der Antriebsräder.

Das Ausführungsbeispiel umfasst eine erfindungsgemäße landwirtschaftliche Arbeitsmaschine 1, die hier von einem Feldhäcksler gebildet ist. Wie in Fig. 1 dargestellt, ist an einer Vorderachse der Arbeitsmaschine beidseits jeweils ein erfindungsgemäßes Raupenlaufwerk 2 angeordnet. An seiner Hinterachse ist das Fahrzeug 1 wie üblich mit Hinterrädern 3 ausgestattet.

Die Raupenlaufwerke 2 umfassen jeweils zwei in Längsrichtung des Raupenlaufwerks 2 hintereinander sowie einander gegenüberliegend angeordnete Umlenkräder 4 sowie zwei zwischen den Umlenkrädern 4 angeordnete Hilfsräder 5. Weiterhin umfasst jedes der Raupenlaufwerke 2 ein elastisches Raupenband 6, das die Umlenkräder 4 umspannt und in einem dem Untergrund 7 zugewandten Abschnitt mit den Hilfsrädern 5 zusammenwirkt. Das hintere und noch näher zu erläuternde Umlenkrad 4 umfasst ein linkes und ein rechtes Antriebsrad 8, 10. Auf den Aufbau eines Raupenlaufwerks 2 mit einem elastischen Raupenband 6 soll nicht detailliert eingegangen werden, da dieser als dem Fachmann bekannt angesehen wird.

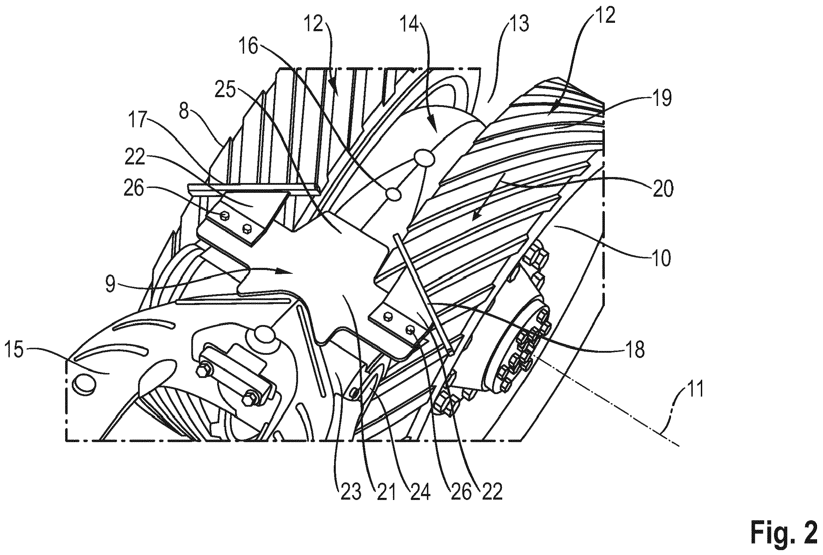

Fig. 2 zeigt das hintere Umlenkrad 4 eines Raupenlaufwerks 2 mit einem den Antriebsrädern 8, 10 zugeordneten Abstreifelement 9. Die rechten und linken Antriebsräder 8, 10 sind beabstandet zueinander und um eine gemeinsame Rotationsachse 11 angeordnet. Der Antrieb des Raupenbandes 6 erfolgt durch eine reibkraftschlüssige Verbindung radial außenseitig zwischen den Antriebsrädern 8, 10 und einer Innenfläche des Raupenbandes 6. Hierfür umfassen die Antriebsräder 8, 10 jeweils eine zylindrisch ausgebildete Führungsfläche 12. Die Führungsfläche 12 bildet eine Kontaktfläche mit dem Raupenband 6.

Zwischen den beabstandet angeordneten Antriebsrädern 8, 10 ist eine Führungsnut 13 ausgebildet. Als Führungsnut 13 ist hier ein sich kanalförmig in Umfangsrichtung 20 zwischen den Antriebsrädern 8, 10 erstreckender Freiraum zu verstehen. Zur seitlichen Führung weist das Raupenband 6 innenseitig angeordnete Führungsblöcke (nicht gezeigt) auf, welche im Wesentlichen mittig des Raupenbandes 6 angeordnet und in der Führungsnut 13 geführt sind.

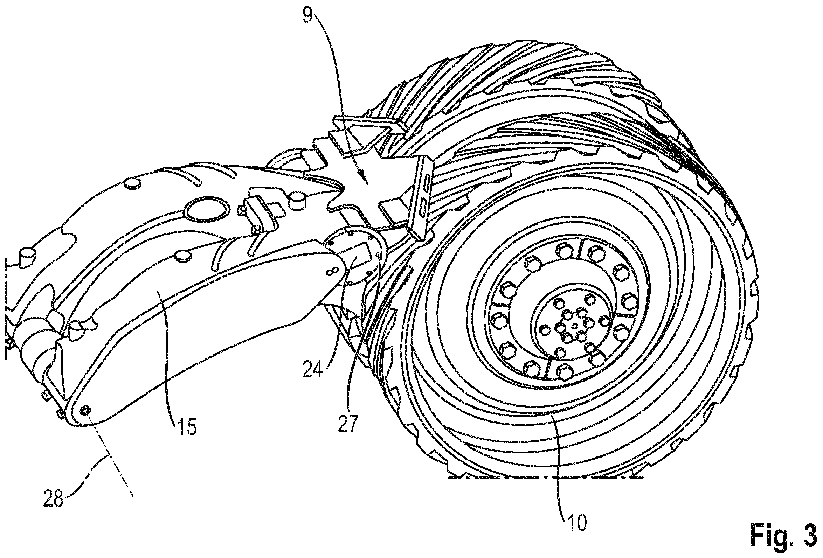

Die Antriebsräder 8, 10 sind mit einem zwischen den Antriebsrädern 8, 10 befindlichen Getriebe 14 trieblich verbunden. Wie Fig. 3 zeigt, ist das Getriebe 14 ortsfest an einem Schwenkarm 15 angeordnet, wobei das Getriebe 14 gemeinsam mit den Antriebsrädern 10 um eine Schwenkachse 28 des Schwenkarms 15 verschwenkbar ist. Die Bodenfläche 16 der Führungsnut 12 ist von einem Abschnitt des Getriebegehäuses des Getriebes 14 gebildet.

Das Abstreifelement 9 umfasst eine erste und eine zweite Abstreiffläche 17, 18, die jeweils einem der Antriebsräder 8, 10 zugeordnet sind. Dem linken Antriebsrad 8 ist die erste Abstreiffläche 17 und dem rechten Antriebsrad 10 ist die zweite Abstreiffläche 18 zugeordnet. Die Abstreifflächen 17, 18 sind derart positioniert, sodass diese im Betriebszustand des Raupenlaufwerks 2 Verschmutzungen, insbesondere Steine, von den Führungsflächen 12 der Antriebsräder 8, 10 abstreifen. Um einen Reinigungseffekt entlang der gesamten Kontaktfläche der Antriebsräder 8, 10 zu erreichen, erstreckt sich die jeweilige Abstreiffläche 17, 18 über die gesamte Breite des jeweiligen Antriebsrads 8, 10 und ist im Wesentlichen senkrecht zu der Führungsfläche 12 ausgerichtet. In Umfangsrichtung 20 der Antriebsräder 8, 10 sind die Abstreifflächen 17, 18 schräg angeordnet. Die schräge Anordnung bewirkt, dass die Verunreinigungen nach außen hin abgeleitet werden.

Die Antriebsräder 8, 10 weisen radial außenseitig jeweils eine Profilierung auf. Die Profilierung ist von Vertiefungen 19 in der Oberfläche der Führungsfläche 12 gebildet. Die Vertiefungen 19 der Profilierung erstrecken sich geradlinig entlang der Führungsfläche 12. Ausgehend von der Führungsnut 13 erstrecken sich die Vertiefungen 19 entgegengerichtet zur Umfangsrichtung 20 hin zu der der Führungsnut 13 gegenüberliegenden Stirnseite des jeweiligen Antriebsrads 8, 10. Die Vertiefungen 19 sind im Wesentlichen orthogonal zu der dem jeweiligen Antriebsrad 8, 10 zugeordneten Abstreiffläche 17, 18 ausgerichtet. Diese Ausrichtung bewirkt, dass die jeweilige Abstreiffläche Verschmutzungen und Steine entlang der Vertiefungen 19 verschiebt und diese stirnseitig des Antriebsrads 8, 10 über die Führungsfläche 12 hinausgeschoben werden. Hierbei sind die erste und zweite Abstreiffläche 17, 18 einander abgewandt ausgerichtet, sodass die Verunreinigungen von der Führungsnut 13 abgeleitet werden.

Die erste und zweite Abstreiffläche 17, 18 befinden sich an separaten Abstreifern 22, die an einem Trägerelement 21 des Abstreifelements 9 angeordnet sind. Die Abstreifer 22 sind verstellbeweglich an dem Trägerelement 21 angeordnet, sodass ein Abstand der Abstreifer 22 und somit auch der ersten und zweiten Abstreiffläche 17, 18 zu dem jeweiligen Antriebsrad 8, 10 einstellbar ist. Unter Abstand ist hier die Breite eines sich zwischen der jeweiligen Abstreiffläche 17, 18 und dem jeweiligen Antriebsrad 8, 10 befindlichen Spalts zu verstehen. Hierfür umfasst das Trägerelement 21 zur Anordnung der Abstreifflächen 17, 18 bzw. der Abstreifer 22 Länglöcher (nicht gezeigt), wobei die Abstreifflächen 17, 18 bzw. die Abstreifer 22 mit einer Schraubverbindung (26) in den Langlöchern befestigt sind. In einer alternativen Ausgestaltung können auch an den Abstreifflächen 17, 18 bzw. den Abstreifern 22 Langlöcher vorgesehen sein, um diese verstellbeweglich an dem Trägerelement 21 anzuordnen.

Das Trägerelement 21 des Abstreifelements 9 liegt flächig auf dem Schwenkarm 15 auf. In dem hier gezeigten Ausführungsbeispiel befindet sich an dem Schwenkarm 15 ein zylindrischer Abschnitt 23. Innerhalb des zylindrischen Abschnitts 23 ist eine Antriebswelle (nicht gezeigt) zur Übertragung eines Antriebsmoments auf die Antriebsräder 10 gelagert. Das Trägerelement 21 umfasst ein kreisblech, welches abschnittsweise auf dem zylindrischen Abschnitt 23 aufliegt. Eine derartige Anordnung hat sich als besonders robust erwiesen. Auch hinsichtlich der Nachrüstbarkeit des Abstreifelements 9 ist eine solche Anordnung besonders vorteilhaft, da das Trägerelement 21 mit den Schrauben 27 am Lagerdecken 24 der Antriebswelle verschraubt werden kann.

Das Trägerelement 21 des Abstreifelements 9 umfasst eine Lippe 25, die in die Führungsnut 13 hineinragt. Die Lippe 25 liegt endseitig auf dem Getriebegehäuse 16 auf. Dadurch, dass das Trägerelement zusätzlich mit einer Lippe 25 auf dem Getriebegehäuse 16 anliegt, wird die Anordnung des Abstreifelements 9 zusätzlich stabilisiert, sodass insbesondere auch bei etwaigen auf die Abstreifflächen 17, 18 wirkenden Stößen das Abstreifelement 9 in seiner Position verbleibt. Zusätzlich können auch in der Führungsnut 13 befindliche Verunreinigungen über die Lippe 25 wieder aus der Führungsnut 13 herausgeleitet werden.

### Bezugszeichenliste:

- 1: Landwirtschaftliche Arbeitsmaschine
- 2: Raupenlaufwerk
- 3: Hinterrad
- 4: Umlenkrad
- 5: Hilfsrad
- 6: Raupenband
- 7: Untergrund
- 8: Linkes Antriebsrad
- 9: Abstreifelement
- 10: Rechtes Antriebsrad
- 11: Rotationsachse
- 12: Führungsfläche
- 13: Führungsnut
- 14: Getriebe
- 15: Schwenkarm
- 16: Bodenfläche
- 17: Erste Abstreiffläche
- 18: Zweite Abstreiffläche
- 19: Vertiefung
- 20: Umfangsrichtung
- 21: Trägerelement
- 22: Abstreifer
- 23: Zylindrischer Abschnitt
- 24: Lagerdeckel
- 25: Lippe
- 26: Schraubverbindung
- 27: Schrauben
- 28: Schwenkachse

## Patentansprüche

1. Landwirtschaftliche Arbeitsmaschine (1) mit einem Raupenlaufwerk (2), wobei das Raupenlaufwerk (2) ein rechtes und ein linkes Antriebsrad (8, 10) zum Antreiben eines elastischen Raupenbandes (6) des Raupenlaufwerks (2) umfasst, wobei die Antriebsräder (8, 10) drehbeweglich um eine gemeinsame Rotationsachse (11) und beabstandet zueinander angeordnet sind, wobei die Antriebsräder (8, 10) zwischeneinander eine Führungsnut (13) ausbilden,
**dadurch gekennzeichnet, dass**
den Antriebsrädern (8, 10) ein Abstreifelement (9) zugeordnet ist, wobei das Abstreifelement (9) eine erste und eine zweite Abstreiffläche (17, 18) umfasst, wobei die erste und zweite Abstreifflächen (17, 18) jeweils einem der Antriebsräder (8, 10) zugeordnet und zur Umfangsrichtung (20) der Antriebsräder (8, 10) schräg angeordnet sind.

2. Landwirtschaftliche Arbeitsmaschine (1) nach Anspruch 1, **dadurch gekennzeichnet, dass** die Antriebsräder (8, 10) radial außenseitig jeweils eine Profilierung aufweisen, wobei sich die Vertiefungen (19) der jeweiligen Profilierung im Wesentlichen geradlinig erstrecken und die Vertiefungen (19) im Wesentlichen orthogonal zu der dem jeweiligen Antriebsrad (8, 10) zugeordneten Abstreiffläche (17, 18) ausgerichtet sind.

3. Landwirtschaftliche Arbeitsmaschine (1) nach einem der Ansprüche 1 oder 2, **dadurch gekennzeichnet, dass** die erste und zweite Abstreifflächen (17, 18) einander abgewandt ausgerichtet sind.

4. Landwirtschaftliche Arbeitsmaschine (1) nach einem der Ansprüche 1 bis 3, **dadurch gekennzeichnet, dass** das Abstreifelement (9) eine Lippe (25) aufweist, wobei die Lippe (25) in die Führungsnut (13) hineinragt, wobei vorzugsweise die Lippe (25) auf einer Bodenfläche (16) der Führungsnut (13) zumindest abschnittsweise anliegt.

5. Landwirtschaftliche Arbeitsmaschine (1) nach einem der Ansprüche 1 bis 4, **dadurch gekennzeichnet, dass** die erste und zweite Abstreiffläche (17, 18) an einem Trägerelement (21) des Abstreifelements (9) angeordnet sind, wobei vorzugsweise die erste und zweite Abstreiffläche (17, 18) und das Trägerelement (21) als separate Bauteile ausgebildet sind.

6. Landwirtschaftliche Arbeitsmaschine (1) nach Anspruch 5, **dadurch gekennzeichnet, dass** die erste und zweite Abstreiffläche (17, 18) verstellbeweglich an dem Trägerelement (21) angeordnet sind, sodass ein Abstand der ersten und zweiten Abstreiffläche (17, 18) zu dem jeweiligen Antriebsrad (8, 10) einstellbar ist.

7. Landwirtschaftliche Arbeitsmaschine (1) nach einem der Ansprüche 5 oder 6, **dadurch gekennzeichnet, dass** das Trägerelement (21) und/oder die erste Abstreiffläche (17) und/oder die zweite Abstreiffläche (18) Langlöcher zur Einstellung des Abstands der ersten und zweiten Abstreifflächen (17, 18) zu dem jeweiligen Antriebsrad (8, 10) aufweist.

8. Landwirtschaftliche Arbeitsmaschine (1) nach einem der Ansprüche 1 bis 7, **dadurch gekennzeichnet, dass** das Raupenlaufwerk (2) einen Schwenkarm (15) umfasst, wobei die Antriebsräder (8, 10) und das Abstreifelement (9) an dem Schwenkarm (15) angeordnet sind.

9. Landwirtschaftliche Arbeitsmaschine (1) nach Anspruch 7, **dadurch gekennzeichnet, dass** das Abstreifelement (9) flächig auf dem Schwenkarm (15) anliegt und vorzugsweise mittels zumindest einer Schraubverbindung (27) ortsfest an dem Schwenkarm (15) angeordnet ist.
